(19) Europäisches Patentamt
European Patent Office
Office européen des brevets

(11) **EP 4 637 074 B1**

(12) **EUROPEAN PATENT SPECIFICATION**

(45) Date of publication and mention
of the grant of the patent:
**29.07.2026  Bulletin 2026/31**

(21) Application number: **24171025.0**

(22) Date of filing: **18.04.2024**

(51) International Patent Classification (IPC):
*H04L 9/00* (2022.01)          *G06F 17/14* (2006.01)
*H04L 9/30* (2006.01)

(52) Cooperative Patent Classification (CPC):
**H04L 9/004; G06F 17/144; H04L 9/3093;**
G06F 2207/7271

(54) **PROTECTING NUMBER THEORETIC TRANSFORM OPERATIONS**

SCHUTZ VON OPERATIONEN ZUR THEORETISCHEN TRANSFORMATION VON NUMMERN

PROTECTION D'OPÉRATIONS DE TRANSFORMATION THÉORÉTIQUE DE NOMBRE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**22.10.2025  Bulletin 2025/43**

(73) Proprietor: NXP B.V.
**5656 AG Eindhoven (NL)**

(72) Inventor: **FAY, Björn**
**22529 Hamburg (DE)**

(74) Representative: **Colaiuda, Antonella**
**NXP Semiconductors Germany GmbH
Intellectual Property Group
Beiersdorfstraße 12
22529 Hamburg (DE)**

(56) References cited:
• SINGH RICHA ET AL: "Analysis of EM Fault
Injection on Bit-sliced Number Theoretic
Transform Software in Dilithium", ACM
TRANSACTIONS ON EMBEDDED COMPUTING
SYSTEMS, ACM, NEW YORK, NY, US, vol. 23, no.
2, 27 March 2024 (2024-03-27), pages 1 - 27,
XP059503696, ISSN: 1539-9087, DOI: 10.1145/
3583757

• RAVI PRASANNA ET AL: "Side-channel and
Fault-injection attacks over Lattice-based Post-
quantum Schemes (Kyber, Dilithium): Survey
and New Results", ACM TRANSACTIONS ON
EMBEDDED COMPUTING SYSTEMS, ACM, NEW
YORK, NY, US, vol. 23, no. 2, 28 March 2024
(2024-03-28), pages 1 - 54, XP059414249, ISSN:
1539-9087, DOI: 10.1145/3603170

• PRASANNA RAVI ET AL: "Side-channel and
Fault-injection attacks over Lattice-based Post-
quantum Schemes (Kyber, Dilithium): Survey
and New Results", vol. 20220609:065932, 9 June
2022 (2022-06-09), pages 1 - 32, XP061074615,
Retrieved from the Internet <URL:https://eprint.
iacr.org/archive/2022/737/1654757972.pdf>
[retrieved on 20220609]

## Description

<u>Field</u>

The disclosure relates to protecting computer-implemented Number Theoretic Transform (NTT) operations from fault attacks.

<u>Background</u>

Digital security infrastructure relies on a range of efficient and secure cryptographic operations, including symmetric and asymmetric cryptography. Current asymmetric cryptography schemes include RSA and ECC, which are widely used in many applications, for example to enable secure symmetric key exchange, secure digital signing, as well as asymmetric encryption and decryption operations. It is infeasible using conventional computer technology to break such schemes provided that a sufficiently long key is used. With the anticipated introduction of quantum computing, however, such schemes could become vulnerable to attack. Further cryptographic standards are being developed that are designed to be resistant to quantum computing algorithms. Recent significant advances in quantum computing have accelerated research into post-quantum cryptography (PQC) schemes, i.e. cryptographic algorithms which run on classical computers but are believed to be still secure even when faced with an adversary having access to a quantum computer.

Various algorithms for PQC schemes such as Dilithium and Kyber require the use of NTTs for fast multiplication of polynomials. Applications for PQC schemes may require these algorithms to run on embedded devices or smart cards. Such applications therefore need to be protected against side channel and fault attacks. A conventional standard way of protecting cryptographic algorithms against fault attacks is to perform a computation two or more times and compare the results. This is, however, relatively costly in terms of computing power.

<u>Summary</u>

According to a first aspect there is provided a computer implemented method of performing a Number Theoretic Transform, NTT, on an input vector x to determine an output vector y, the method comprising:

i) providing the input vector x, a check vector $c^t$, a detection vector $d^t$ and a matrix T representing the NTT to be performed on the input vector x, wherein the detection vector $d^t$ is equal to a product of the check vector $c^t$ and the matrix T;
ii) computing a first check value as a product of the detection vector $d^t$ with the input vector x;
iii) computing the output vector y as an NTT of the input vector x;

iv) computing a second check value as a product of the check vector $c^t$ with the output vector y; and
v) determining the NTT of the input vector x is correct if the first and second check values are equal to each other.

The first check value may be computed as an inner product of the detection vector $d^t$ with the input vector x and the second check value computed as an inner product of the check vector $c^t$ with the output vector y.

The method may comprise calculating the detection vector $d^t$ as a product of the check vector $c^t$ and the matrix T.

Computing the output vector y as an NTT of the input vector x may comprise performing an NTT algorithm having a plurality of butterfly operations.

According to a second aspect there is provided a computer implemented method of performing an inverse Number Theoretic Transform, NTT, on an input vector y to determine an output vector x, the method comprising:

i) providing the input vector y, a check vector $c^t$, a detection vector $d^t$ and a matrix T' representing the inverse NTT to be performed on the input vector y, wherein the check vector $c^t$ is equal to a product of the detection vector $d^t$ and the matrix T';
ii) computing a first check value as a product of the check vector $c^t$ with the input vector y;
iii) computing the output vector x as an inverse NTT of the input vector y;
iv) computing a second check value as a product of the detection vector with the matrix T'; and
v) determining the inverse NTT of the input vector y is correct if the first and second check values are equal to each other.

The first check value may be computed as an inner product of the check vector $c^t$ with the input vector y and the second check value computed as an inner product of the detection vector $d^t$ with the output vector x.

The method may comprise calculating the check vector $c^t$ as a product of the detection vector $d^t$ and the matrix T'.

Computing the output vector x as an inverse NTT of the input vector y may comprise performing an inverse NTT algorithm having a plurality of butterfly operations.

According to the first or second aspects, the first and second check values may be computed as inner products over a finite ring or field.

According to a third aspect there is provided a method of performing a cryptographic operation comprising one or more NTT operations, wherein each NTT operation is performed according to the method of the first or second aspects.

The cryptographic operation may be one of a key exchange, a signing, an encryption or a decryption operation.

The cryptographic operation may be performed according to a cryptography standard, the cryptography standard being Dilithium or Kyber.

According to a fourth aspect there is provided an apparatus for performing a cryptographic operation comprising an NTT operation on an input vector x to determine an output vector y, the apparatus comprising a processor configured to:

i) provide the input vector x, a check vector $c^t$, a detection vector $d^t$ and a matrix T representing the NTT to be performed on the input vector x, wherein the detection vector $d^t$ is equal to a product of the check vector $c^t$ and the matrix T;
ii) compute a first check value as a product of the detection vector $d^t$ with the input vector x;
iii) compute the output vector y as an NTT of the input vector x;
iv) compute a second check value as a product of the check vector $c^t$ with the output vector y; and
v) determine the NTT of the input vector x is correct if the first and second check values are equal to each other.

According to a fifth aspect there is provided an apparatus for performing a cryptographic operation comprising an inverse NTT operation on an input vector y to determine an output vector x, the apparatus comprising a processor configured to:

i) provide the input vector y, a check vector $c^t$, a detection vector $d^t$ and a matrix T' representing the inverse NTT to be performed on the input vector y, wherein the check vector $c^t$ is equal to a product of the detection vector $d^t$ and the matrix T';
ii) compute a first check value as a product of the check vector $c^t$ with the input vector y;
iii) compute the output vector x as an inverse NTT of the input vector y;
iv) compute a second check value as a product of the detection vector with the matrix T'; and
v) determine the inverse NTT of the input vector y is correct if the first and second check values are equal to each other.

The optional features according to the first, second and third aspects may be applied to the apparatus according to the fourth or fifth aspects.

According to a sixth aspect there is provided a computer program comprising instructions to cause a computer processor to perform the method according to the first or second aspects.

There may be provided a computer program, which when run on a computer, causes the computer to configure any apparatus, including a circuit, controller, sensor, filter, or device disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software implementation may be an assembly program.

The computer program may be provided on a non-transitory computer readable medium, which may be a physical computer readable medium, such as a disc or a memory device, or may be embodied as a transient signal. Such a transient signal may be a network download, including an internet download.

These and other aspects of the invention will be apparent from, and elucidated with reference to, the embodiments described hereinafter.

Brief description of Drawings

Embodiments will be described, by way of example only, with reference to the drawings, in which:

Figure 1 is a diagram indicating inputs and outputs involved in an example NTT operation;

Figure 2 is a flow diagram illustrating an example method of performing an NTT operation;

Figure 3 is a flow diagram illustrating an example method of performing an inverse NTT operation; and

Figure 4 is a schematic diagram of an example apparatus for performing a cryptographic operation.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar feature in modified and different embodiments.

Detailed description of embodiments

The present disclosure relates to protection of NTTs by applying scalar products to source and target vectors with precomputed vectors to generate check values that are relatively simple to compute compared with carrying out the NTT operation multiple times. The operations can be readily computed by interpreting the NTT as a matrix multiplication operation with an invertible matrix and also by taking one of two vectors as an easily constructible vector. The vector may, for example constitute a regular sequence of numbers such as (1, 2, 3, ..., n). An advantage of using a scalar product over finite fields is that every intermediate result does not need to be reduced, but instead can be done only once at the end of the operation.

A general aim is to compute an NTT or an inverse NTT of a polynomial, or more generally of a vector. It may first be established that y = NTT( x ) or x = invNTT( y ), where x and y are some vectors over a (finite) ring (which may also be a field) with n entries $x_1$, ..., $x_n$ and $y_1$, ...,$y_n$. The aim for fault detection is to carry out the operation in such a way such that possible errors can be detected with a defined probability. To do this, it can be seen that an NTT or inverse NTT, including incomplete NTTs such as used in the cryptographic protocol Kyber, can be represented as a matrix multiplication. A matrix T is used herein to represent the NTT and an inverse matrix T' for an inverse NTT, such that T*T' = I, where I is the identity matrix.

The matrix multiplication T may have the form of a Vandermonde matrix, in which each row of the matrix is in the form of a geometric progression. This does not, however, need to be the case, for example for the incomplete NTT operations used in the Kyber protocol. In simple form, the output vector y = T*x and the input vector x = T'*y, with both x and y as column vectors. In order to check the result of such computations, a check vector $c^t$ may be used and a detection vector $d^t$ computed such that $d^t = c^t \cdot T$, where both $c^t$ and $d^t$ are row vectors. The vectors $c^t$ and $d^t$ may be pre-computed and stored prior to performing an NTT or inverse NTT operation. It should also be noted that the inverse also applies, i.e. $c^t = d^t \cdot T'$.

To perform an NTT operation, a check value v is first calculated as $v = d^t \cdot x$, where the product of $d^t$ and x is an inner product. The NTT is then computed by calculating the output vector y as y = T*x. Finally, a check is made to determine whether v == $c^t$*y. Provided there are no errors, the check should confirm correct operation because $c^t$*y = $c^t$*(T*x) = ($c^t$*T)*x = $d^t$*x = v.

For an inverse NTT operation, the same (pre-computed) vectors can be used. First compute v = c*y, then perform the inverse NTT operation x = T'*y and then check if v == d*x, because d*x = d*(T'*y) = (d*T')*y = c*y = v.

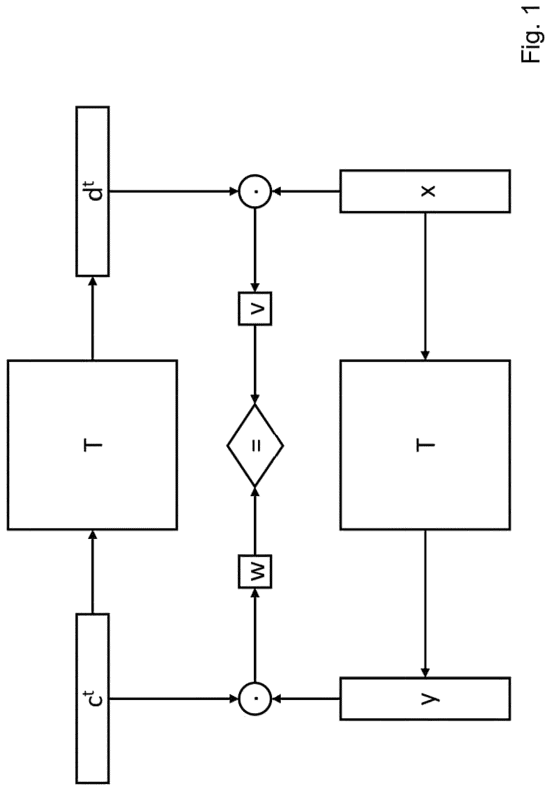

Figure 1 illustrates the relationship between the matrix T representing the NTT operation, the check and detection vectors $c^t$, $d^t$ (as row vectors) and the input and output vectors x, y (as column vectors), with scalar outputs w, v representing the outputs from checks carried out using the vector inputs and outputs with the check and detection vectors. The direction of the arrows in Figure 1 corresponds to an NTT operation, in which an input vector x is transformed to an output vector y by applying the matrix T. Correspondingly, the check vector $c^t$ is transformed to the detection vector $d^t$ using the matrix T. The reverse in each case also applies, i.e. the vector x can be obtained by applying the inverse matrix T' to the vector y and the check vector $c^t$ can be obtained by applying the inverse matrix T' to the detection vector $d^t$. First and second check values w, v are computed as inner products of $c^t$ and y and $d^t$ and x respectively. If these check values are equal, the NTT operation is confirmed as correct.

For optimization the check and detection vectors $c^t$ and $d^t$ may be selected to be easily constructible, for example where $c_i^t = i$, and then pre-computing $d^t$, such that only one vector has to be stored. One example would be where $c_i$ = 1 for all i, but this has a drawback that it will usually result in a vector d = (n, 0, ...,0) for normal NTTs due to the transformation matrix used and also may not be able to detect all kinds of errors. The check or detection vectors should therefore be selected so as to provide more than a single solution. In a general aspect, the check vector or detection vector having plurality of elements may be defined such that each element is a function of the element number. For example, in the case of the check vector $c^t$, each element $c_i$ may be defined as $c_i$ = f(i). Similarly, in the case of the detection vector $d^t$, each element $d_i$ may be defined as $d_i$ = f(i). The function may be defined as f(i) = a + bi, where a and b are constants.

Another possibility for optimization is that, for the computation of the inner products $d^t \cdot x$ and $c^t \cdot y$ over the finite ring or field, all intermediate results do not need to be reduced but reduction could be postponed to the very end, such that a computation such as $t = d_i * x_i + t$ with normal integers may be used, which is in the form of a multiply and accumulation (MAC) operation that is typically available as a specific instruction on standard processors, for example on newer CPUs or DSPs, for example MLA or UMLAL on ARMv8M CPUs.

The error detection probability is 1 - 1/|R|, where R is the (finite) ring (or field) over which all the computations are done. In the case of Kyber, |R| = 3329 (which will require 12 bits to encode the element) and for the case of Dilithium |R| = $2^{23}$ - $2^{13}$ + 1 (which will need 23 bits for encoding). To increase the detection probability, more vector pairs like the check and detection vectors can be used. Care should be taken, however, that these are not linear combinations of each other or the overly simple example described above, because NTTs are linear operations. As an example, $c_i' = 1000 - i$ would not be a good second choice because this would be 1000* (1,1,1,...,1) - c, based on the above example.

The method described herein can also be applied to other matrix multiplications, but is more efficient if the matrix is constant. The method could in principle be applied to real or complex numbers, as used in normal Fourier transformations (typically FFTs), which can be found in many signal processing applications, but in such cases faults are not usually critical as is the case for cryptographic operations. The method is particularly advantageous for cryptographic operations as it permits a simple way of checking that an NTT or inverse NTT operation has been performed correctly, which enables fault attacks to be detected.

A benefit of the method described herein include the requirement for only a small number of registers for runtime variables, while the rest are constants. A further benefit is that the runtime overhead is low, and should be in the order of one NTT-Layer of butterflies.

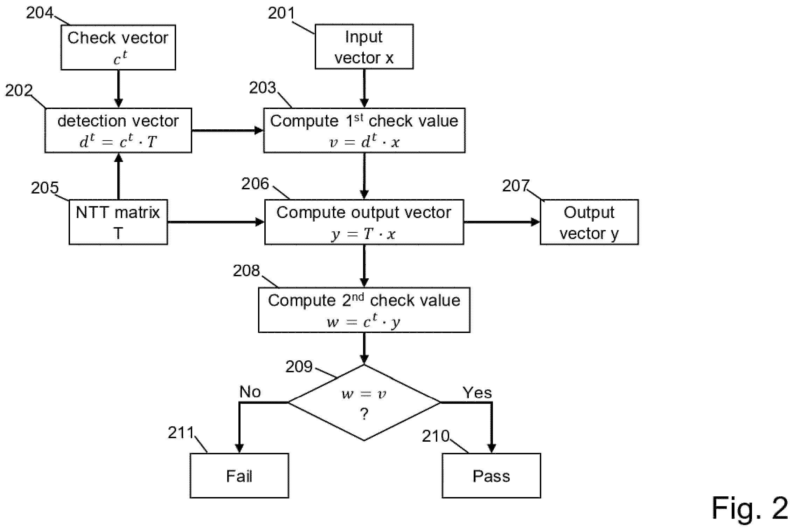

Figure 2 provides an illustration of an NTT operation being performed on an input vector x to determine an output vector y. The input vector x 201 and detection vector $d^t$ 202 are provided to perform an operation 203 of computing a first check value v, which is an inner product of the detection vector $d^t$ with the input vector x. The detection vector $d^t$ 202 may be pre-computed based on a product of the check vector $c^t$ 204 and the matrix T 205 representing the NTT operation. The output vector y is then calculated in an NTT operation 206 on the input vector x, providing the output vector y 207. A second check value w is computed 208 from an inner product of the check vector $c^t$ and the output vector y. The first and second check values w, v are compared 209. If they are equal, the operation is determined to have passed 210, otherwise the operation is determined to have failed 211.

The NTT operation 206 to compute the output vector y from the input vector x may be carried out using a standard NTT algorithm comprising a plurality of butterfly operations. There are multiple known algorithms for performing NTT (and inverse NTT) operations. The NTT operation itself may be performed by applying the matrix T to the input vector x but this will generally not be as efficient as performing an NTT algorithm with a plurality of butterfly operations.

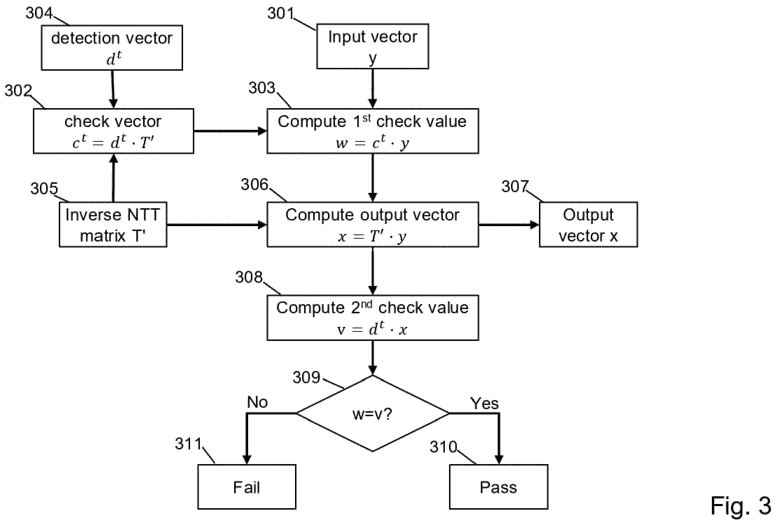

Figure 3 provides an illustration of a corresponding inverse NTT operation being performed on an input vector y to determine an output vector x. The input vector y 301 and check vector $c^t$ 302 are provided to perform an operation 303 of computing a first check value w, which is an inner product of the check vector $c^t$ with the input vector y. The check vector $c^t$ 302 may be precomputed based on a product of the detection vector $d^t$ 304 and the matrix T' 305 representing the inverse NTT operation. The output vector x is then calculated in an inverse NTT operation 306 on the input vector y, providing the output vector x 307. A second check value v is computed 308 from an inner product of the detection vector $d^t$ and the output vector x. The first and second check values w, v are compared 309. If they are equal, the operation is determined to have passed 310, otherwise the operation is determined to have failed 311.

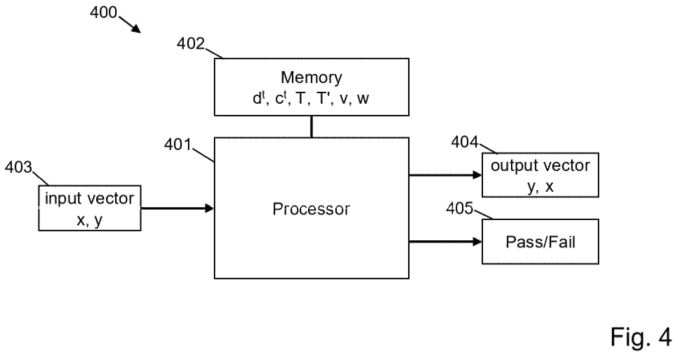

Figure 4 illustrates an example apparatus 400 for performing a cryptographic operation comprising an NTT or inverse NTT operation on an input vector to determine an output vector y. The apparatus comprises a processor 401 connected to a memory 402, which stores the detection and check vectors $d^t$, $c^t$, matrices T, T' and first and second check values v, w. The processor may be a general purpose computer processor such as one of the types described above. The processor receives the input vector x or y 403 and performs the series of operations as described above in relation to Figures 2 or 3, providing an output vector y or x 404 and a pass or fail indication 405.

From reading the present disclosure, other variations and modifications will be apparent to the skilled person. Such variations and modifications may involve equivalent and other features which are already known in the art of cryptography, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A computer implemented method of performing a Number Theoretic Transform, NTT, on an input vector x (201) to determine an output vector y (207), the method comprising:

    i) providing the input vector x (201), a check vector $c^t$ (204), a detection vector $d^t$ (202) and a matrix T (205) representing the NTT to be performed on the input vector x (201), wherein the detection vector $d^t$ (202) is equal to a product of the check vector $c^t$ (204) and the matrix T (205);
    ii) computing (203) a first check value as a product of the detection vector $d^t$ with the input vector x;
    iii) computing (206) the output vector y (207) as an NTT of the input vector x;
    iv) computing (208) a second check value as a product of the check vector $c^t$ with the output vector y; and
    v) determining (209) the NTT of the input vector x is correct (210) if the first and second check values are equal to each other.

**2.** The method of claim 1, wherein the first check value is computed (203) as an inner product of the detection vector $d^t$ (202) with the input vector x (201) and the second check value (208) is computed as an inner product of the check vector $c^t$ (204) with the output vector y (207).

**3.** The method of claim 1 or claim 2, comprising calculating (202) the detection vector $d^t$ as a product of the check vector $c^t$ (204) and the matrix T (205).

**4.** The method of any preceding claim, wherein computing the output vector y as an NTT of the input vector x comprises performing an NTT algorithm having a plurality of butterfly operations.

**5.** A computer implemented method of performing an inverse Number Theoretic Transform, NTT, on an input vector y (301) to determine an output vector x (307), the method comprising:

i) providing the input vector y (301), a check vector $c^t$ (302), a detection vector $d^t$ (304) and a matrix T' (305) representing the inverse NTT to be performed on the input vector y, wherein the check vector $c^t$ (302) is equal to a product of the detection vector $d^t$ (304) and the matrix T' (305);
ii) computing (303) a first check value as a product of the check vector $c^t$ with the input vector y;
iii) computing (306) the output vector x (307) as an inverse NTT of the input vector y (301);
iv) computing (308) a second check value as a product of the detection vector with the matrix T'; and
v) determining (309) the inverse NTT of the input vector y is correct (310) if the first and second check values are equal to each other.

**6.** The method of claim 5, wherein the first check value is computed (303) as an inner product of the check vector $c^t$ (302) with the input vector y (301) and the second check value is computed (308) as an inner product of the detection vector $d^t$ (304) with the output vector x (307).

**7.** The method of claim 5 or claim 6, comprising calculating the check vector $c^t$ (302) as a product of the detection vector $d^t$ (304) and the matrix T' (305).

**8.** The method of any one of claims 5 to 7, wherein computing the output vector x as an inverse NTT of the input vector y comprises performing an inverse NTT algorithm having a plurality of butterfly operations.

**9.** The method of any preceding claim, wherein the first and second check values are computed (203, 208, 303, 308) as inner products over a finite ring or field.

**10.** A method of performing a cryptographic operation comprising one or more NTT operations, wherein each NTT operation is performed according to the method of any preceding claim.

**11.** The method of claim 10, wherein the cryptographic operation is one of a key exchange, a signing, an encryption or a decryption operation.

**12.** The method of claim 10 or claim 11, wherein the cryptographic operation is performed according to a cryptography standard, the cryptography standard being Dilithium or Kyber.

**13.** An apparatus (400) for performing a cryptographic operation comprising an NTT operation on an input vector x (403) to determine an output vector y (404), the apparatus comprising a processor (401) configured to:

i) provide the input vector x (403), a check vector $c^t$, a detection vector $d^t$ and a matrix T representing the NTT to be performed on the input vector x (403), wherein the detection vector $d^t$ is equal to a product of the check vector $c^t$ and the matrix T;
ii) compute a first check value as a product of the detection vector $d^t$ with the input vector x (403);
iii) compute the output vector y (404) as an NTT of the input vector x (403);
iv) compute a second check value as a product of the check vector $c^t$ with the output vector y (404); and
v) determine the NTT of the input vector x is correct (405) if the first and second check values are equal to each other.

**14.** An apparatus (400) for performing a cryptographic operation comprising an inverse NTT operation on an input vector y (403) to determine an output vector x (404), the apparatus (400) comprising a processor (401) configured to:

i) provide the input vector y (403), a check vector $c^t$, a detection vector $d^t$ and a matrix T' representing the inverse NTT to be performed on the input vector y (403), wherein the check vector $c^t$ is equal to a product of the detection vector $d^t$ and the matrix T;
ii) compute a first check value as a product of the check vector $c^t$ with the input vector y (403);
iii) compute the output vector x (404) as an inverse NTT of the input vector y (403);
iv) compute a second check value as a product of the detection vector with the matrix T'; and
v) determine the inverse NTT of the input vector y is correct (405) if the first and second check values are equal to each other.

15. A computer program comprising instructions to cause a processor (401) to perform the method according to any one of claims 1 to 12.

## Patentansprüche

1. Computerimplementiertes Verfahren zum Durchführen einer zahlentheoretischen Transformation, NTT, an einem Eingangsvektor x (201), um einen Ausgangsvektor y (207) zu bestimmen, wobei das Verfahren umfasst:

   i) Bereitstellen des Eingangsvektors x (201), eines Prüfvektors $c^t$ (204), eines Detektionsvektors $d^t$ (202) und einer Matrix T (205), die die NTT darstellt, die an dem Eingangsvektor x (201) durchzuführen ist, wobei der Detektionsvektor $d^t$ (202) gleich einem Produkt des Prüfvektors $c^t$ (204) und der Matrix T (205) ist;
   ii) Berechnen (203) eines ersten Prüfwerts als ein Produkt des Detektionsvektors $d^t$ mit dem Eingangsvektor x;
   iii) Berechnen (206) des Ausgangsvektors y (207) als eine NTT des Eingangsvektors x;
   iv) Berechnen (208) eines zweiten Prüfwerts als ein Produkt des Prüfvektors $c^t$ mit dem Ausgangsvektor y und
   v) Bestimmen (209), dass die NTT des Eingangsvektors x korrekt ist (210), wenn der erste und der zweite Prüfwert untereinander gleich sind.

2. Verfahren nach Anspruch 1, wobei der erste Prüfwert als ein inneres Produkt des Detektionsvektors $d^t$ (202) mit dem Eingangsvektor x (201) berechnet wird (203) und der zweite Prüfwert (208) als ein inneres Produkt des Prüfvektors $c^t$ (204) mit dem Ausgangsvektor y (207) berechnet wird.

3. Verfahren nach Anspruch 1 oder Anspruch 2, das ein Berechnen (202) des Detektionsvektors $d^t$ als ein Produkt des Prüfvektors $c^t$ (204) und der Matrix T (205) umfasst.

4. Verfahren nach einem der vorhergehenden Ansprüche, wobei das Berechnen des Ausgangsvektors y als eine NTT des Eingangsvektors x ein Durchführen eines NTT-Algorithmus mit einer Vielzahl von Butterfly-Operationen umfasst.

5. Computerimplementiertes Verfahren zum Durchführen einer inversen zahlentheoretischen Transformation, NTT, an einem Eingangsvektor y (301), um einen Ausgangsvektor x (307) zu bestimmen, wobei das Verfahren umfasst:

   i) Bereitstellen des Eingangsvektors y (301), eines Prüfvektors $c^t$ (302), eines Detektionsvektors $d^t$ (304) und einer Matrix T' (305), die die inverse NTT darstellt, die am Eingangsvektor y durchzuführen ist, wobei der Prüfvektor $c^t$ (302) gleich einem Produkt des Detektionsvektors $d^t$ (304) und der Matrix T' (305) ist;
   ii) Berechnen (303) eines ersten Prüfwerts als ein Produkt des Prüfvektors $c^t$ mit dem Eingangsvektor y;
   iii) Berechnen (306) des Ausgangsvektors x (307) als eine inverse NTT des Eingangsvektors y (301);
   iv) Berechnen (308) eines zweiten Prüfwerts als ein Produkt des Detektionsvektors mit der Matrix T' und
   v) Bestimmen (309), dass die inverse NTT des Eingangsvektors y korrekt ist (310), wenn der erste und der zweite Prüfwert untereinander gleich sind.

6. Verfahren nach Anspruch 5, wobei der erste Prüfwert als ein inneres Produkt des Prüfvektors $c^t$ (302) mit dem Eingangsvektor y (301) berechnet wird (303) und der zweite Prüfwert als ein inneres Produkt des Detektionsvektors $d^t$ (304) mit dem Ausgangsvektor x (307) berechnet wird (308).

7. Verfahren nach Anspruch 5 oder Anspruch 6, das ein Berechnen des Prüfvektors $c^t$ (302) als ein Produkt des Detektionsvektors $d^t$ (304) und der Matrix T' (305) umfasst.

8. Verfahren nach einem der Ansprüche 5 bis 7, wobei das Berechnen des Ausgangsvektors x als eine inverse NTT des Eingangsvektors y ein Durchführen eines Algorithmus einer inversen NTT mit einer Vielzahl von Butterfly-Operationen umfasst.

9. Verfahren nach einem der vorhergehenden Ansprüche, wobei der erste und der zweite Prüfwert als innere Produkte über einen endlichen Ring oder ein endliches Feld berechnet werden (203, 208, 303, 308).

10. Verfahren zum Durchführen einer kryptografischen Operation, die eine oder mehrere NTT-Operation(en) umfasst, wobei jede NTT-Operation gemäß dem Verfahren nach einem der vorhergehenden Ansprüche durchgeführt wird.

11. Verfahren nach Anspruch 10, wobei die kryptografische Operation eine von einem Schlüsselaustausch-, einer Signier-, einer Verschlüsselungs- oder einer Entschlüsselungsoperation ist.

12. Verfahren nach Anspruch 10 oder Anspruch 11, wobei die kryptografische Operation gemäß einem Kryptografiestandard durchgeführt wird, wobei der Kryptografiestandard Dilithium oder Kyber ist.

13. Einrichtung (400) zum Durchführen einer kryptografischen Operation, die eine NTT-Operation an einem Eingangsvektor x (403) umfasst, um einen Ausgangsvektor y (404) zu bestimmen, wobei die Einrichtung einen Prozessor (401) umfasst, der konfiguriert ist zum:

i) Bereitstellen des Eingangsvektors x (403), eines Prüfvektors $c^t$, eines Detektionsvektors $d^t$ und einer Matrix T, die die NTT darstellt, die an dem Eingangsvektor x (403) durchzuführen ist, wobei der Detektionsvektor $d^t$ gleich einem Produkt des Prüfvektors $c^t$ und der Matrix T ist;
ii) Berechnen eines ersten Prüfwerts als ein Produkt des Detektionsvektors $d^t$ mit dem Eingangsvektor x (403);
iii) Berechnen des Ausgangsvektors y (404) als eine NTT des Eingangsvektors x (403);
iv) Berechnen eines zweiten Prüfwerts als ein Produkt des Prüfvektors $c^t$ mit dem Ausgangsvektor y (404) und
v) Bestimmen, dass die NTT des Eingangsvektors x korrekt ist (405), wenn der erste und der zweite Prüfwert untereinander gleich sind.

14. Einrichtung (400) zum Durchführen einer kryptografischen Operation, die eine Operation einer inversen NTT an einem Eingangsvektor y (403) umfasst, um einen Ausgangsvektor x (404) zu bestimmen, wobei die Einrichtung (400) einen Prozessor (401) umfasst, der konfiguriert ist zum:

i) Bereitstellen des Eingangsvektors y (403), eines Prüfvektors $c^t$, eines Detektionsvektors $d^t$ und einer Matrix T', die die inverse NTT darstellt, die an dem Eingangsvektor y (403) durchzuführen ist, wobei der Prüfvektor $c^t$ gleich einem Produkt des Detektionsvektors $d^t$ und der Matrix T' ist;
ii) Berechnen eines ersten Prüfwerts als ein Produkt des Prüfvektors $c^t$ mit dem Eingangsvektor y (403);
iii) Berechnen des Ausgangsvektors x (404) als eine inverse NTT des Eingangsvektors y (403);
iv) Berechnen eines zweiten Prüfwerts als ein Produkt des Detektionsvektors mit der Matrix T' und
v) Bestimmen, dass die inverse NTT des Eingangsvektors y korrekt ist (405), wenn der erste und der zweite Prüfwert untereinander gleich sind.

15. Computerprogramm, das Anweisungen umfasst, um einen Prozessor (401) zu veranlassen, das Verfahren nach einem der Ansprüche 1 bis 12 durchzuführen.

**Revendications**

1. Procédé mis en œuvre par ordinateur permettant d'effectuer une transformation théorique de nombres, NTT, sur un vecteur d'entrée x (201) afin de déterminer un vecteur de sortie y (207), le procédé comprenant les étapes suivantes :

i) fournir le vecteur d'entrée x (201), un vecteur de contrôle $c^t$ (204), un vecteur de détection $d^t$ (202) et une matrice T (205) représentant la NTT à effectuer sur le vecteur d'entrée x (201), où le vecteur de détection $d^t$ (202) est égal à un produit du vecteur de contrôle $c^t$ (204) et de la matrice T (205) ;
ii) calculer (203) une première valeur de contrôle en tant que produit du vecteur de détection $d^t$ avec le vecteur d'entrée x ;
iii) calculer (206) le vecteur de sortie y (207) en tant que NTT du vecteur d'entrée x ;
iv) calculer (208) une deuxième valeur de contrôle en tant que produit du vecteur de contrôle $c^t$ par le vecteur de sortie y ; et
v) déterminer (209) que la NTT du vecteur d'entrée x est correcte (210) si les première et deuxième valeurs de contrôle sont égales entre elles.

2. Procédé selon la revendication 1, dans lequel la première valeur de contrôle est calculée (203) en tant que produit scalaire du vecteur de détection $d^t$ (202) avec le vecteur d'entrée x (201) et la deuxième valeur de contrôle (208) est calculée en tant que produit scalaire du vecteur de contrôle $c^t$ (204) avec le vecteur de sortie y (207).

3. Procédé selon la revendication 1 ou la revendication 2, le procédé comprenant le calcul (202) du vecteur de détection $d^t$ en tant que produit du vecteur de contrôle $c^t$ (204) et de la matrice T (205).

4. Procédé selon l'une quelconque des revendications précédentes, dans lequel le calcul du vecteur de sortie y en tant que NTT du vecteur d'entrée x comprend l'exécution d'un algorithme NTT ayant une pluralité d'opérations papillon.

5. Procédé mis en œuvre par ordinateur permettant d'effectuer une transformée théorique de nombres inverse, NTT, sur un vecteur d'entrée y (301) afin de déterminer un vecteur de sortie x (307), le procédé comprenant les étapes suivantes :

i) fournir le vecteur d'entrée y (301), un vecteur de contrôle $c^t$ (302), un vecteur de détection $d^t$

(304) et une matrice T' (305) représentant la NTT inverse à effectuer sur le vecteur d'entrée y, où le vecteur de contrôle $c^t$ (302) est égal à un produit du vecteur de détection $d^t$ (304) et de la matrice T' (305) ;

ii) calculer (303) une première valeur de contrôle en tant que produit du vecteur de contrôle $c^t$ avec le vecteur d'entrée y ;

iii) calculer (306) le vecteur de sortie x (307) en tant que NTT inverse du vecteur d'entrée y (301) ;

iv) calculer (308) une deuxième valeur de contrôle en tant que produit du vecteur de détection avec la matrice T' ; et

v) déterminer (309) que la NTT inverse du vecteur d'entrée y est correcte (310) si les première et deuxième valeurs de contrôle sont égales entre elles.

6. Procédé selon la revendication 5, dans lequel la première valeur de contrôle est calculée (303) en tant que produit scalaire du vecteur de contrôle $c^t$ (302) avec le vecteur d'entrée y (301) et la deuxième valeur de contrôle est calculée (308) en tant que produit scalaire du vecteur de détection $d^t$ (304) avec le vecteur de sortie x (307).

7. Procédé selon la revendication 5 ou la revendication 6, comprenant le calcul du vecteur de contrôle $c^t$ (302) en tant que produit du vecteur de détection $d^t$ (304) et de la matrice T' (305).

8. Procédé selon l'une quelconque des revendications 5 à 7, dans lequel le calcul du vecteur de sortie x en tant que NTT inverse du vecteur d'entrée y comprend l'exécution d'un algorithme NTT inverse ayant une pluralité d'opérations papillon.

9. Procédé selon l'une quelconque des revendications précédentes, dans lequel les première et deuxième valeurs de contrôle sont calculées (203, 208, 303, 308) en tant que produits scalaires sur un anneau fini ou un corps fini.

10. Procédé d'exécution d'une opération cryptographique comprenant une ou plusieurs opérations NTT, où chaque opération NTT est exécutée conformément au procédé de l'une quelconque des revendications précédentes.

11. Procédé selon la revendication 10, dans lequel l'opération cryptographique est l'une parmi une opération d'échange de clés, une opération de signature, un cryptage ou un décryptage.

12. Procédé selon la revendication 10 ou la revendication 11, dans lequel l'opération cryptographique est exécutée selon une norme cryptographique, la norme cryptographique étant le Dilithium ou Kyber.

13. Appareil (400) pour réaliser une opération cryptographique comprenant une opération NTT sur un vecteur d'entrée x (403) afin de déterminer un vecteur de sortie y (404), l'appareil comprenant un processeur (401) configuré pour :

i) fournir le vecteur d'entrée x (403), un vecteur de contrôle $c^t$, un vecteur de détection $d^t$ et une matrice T représentant la NTT à effectuer sur le vecteur d'entrée x (403), où le vecteur de détection $d^t$ est égal à un produit du vecteur de contrôle $c^t$ et de la matrice T ;

ii) calculer une première valeur de contrôle en tant que produit du vecteur de détection $d^t$ avec le vecteur d'entrée x (403) ;

iii) calculer le vecteur de sortie y (404) en tant que NTT du vecteur d'entrée x (403) ;

iv) calculer une deuxième valeur de contrôle en tant que produit du vecteur de contrôle $c^t$ par le vecteur de sortie y (404) ; et

v) déterminer que la NTT du vecteur d'entrée x est correcte (405) si les première et deuxième valeurs de contrôle sont égales entre elles.

14. Appareil (400) pour réaliser une opération cryptographique comprenant une opération NTT inverse sur un vecteur d'entrée y (403) afin de déterminer un vecteur de sortie x (404), l'appareil (400) comprenant un processeur (401) configuré pour :

i) fournir le vecteur d'entrée y (403), un vecteur de contrôle $c^t$, un vecteur de détection $d^t$ et une matrice T représentant la NTT inverse à effectuer sur le vecteur d'entrée y (403), où le vecteur de contrôle $c^t$ est égal à un produit du vecteur de détection $d^t$ et de la matrice T' ;

ii) calculer une première valeur de contrôle en tant que produit du vecteur de contrôle $c^t$ avec le vecteur d'entrée y (403) ;

iii) calculer le vecteur de sortie x (404) en tant que NTT inverse du vecteur d'entrée y (403) ;

iv) calculer une deuxième valeur de contrôle en tant que produit du vecteur de détection par la matrice T' ; et

v) déterminer que la NTT inverse du vecteur d'entrée y est correcte (405) si les première et deuxième valeurs de contrôle sont égales entre elles.

15. Programme informatique comprenant des instructions pour amener un processeur (401) à exécuter le procédé selon l'une quelconque des revendications 1 à 12.

Fig. 1

204 Check vector
$c^t$

201 Input
vector x

202 detection vector
$d^t = c^t \cdot T$

203 Compute 1st check value
$v = d^t \cdot x$

205 NTT matrix
T

206 Compute output vector
$y = T \cdot x$

207 Output
vector y

208 Compute 2nd check value
$w = c^t \cdot y$

209 $w = v$ ?

No

Yes

211 Fail

210 Pass

Fig. 2

301 — Input vector $y$

303 — Compute 1ˢᵗ check value $w = c^t \cdot y$

307 — Output vector x

306 — Compute output vector $x = T' \cdot y$

308 — Compute 2ⁿᵈ check value $v = d^t \cdot x$

304 — detection vector $d^t$

302 — check vector $c^t = d^t \cdot T'$

305 — Inverse NTT matrix T'

309 — w=v?

Yes → 310 — Pass

No → 311 — Fail

Fig. 3

EP 4 637 074 B1

400

402

Memory
$d^t, c^t, T, T', v, w$

401

403

input vector
x, y

Processor

404

output vector
y, x

405

Pass/Fail

Fig. 4